# EUROPEAN PATENT SPECIFICATION

(11) **EP 0 435 587 B1**
(45) Date of publication and mention of the grant of the patent: **03.04.1996**
(21) Application number: 90314050.7
(22) Date of filing: 20.12.1990
(51) Int. Cl.: B60G 17/052, B60G 11/27, B60G 5/00, B60G 17/033

(54) **Multi-axle air suspension system for a vehicle**
Mehrachsluftaufhängungssystem für ein Fahrzeug
Système de suspension pneumatique multiessieux pour un véhicule

(30) Priority: 23.12.1989 GB 8929185
(43) Date of publication of application: 03.07.1991
(73) Proprietor: ROR ROCKWELL LIMITED, Llay, Wrexham, Clwyd LL12 0PB (GB)
(72) Inventor: Griffiths, Paul John, Deeside, Clwyd, CH5 2SG, Wales (GB)
(74) Representative: Spall, Christopher John

(56) References cited:
- DE-A- 3 545 222
- DE-U- 8 911 010
- FR-A- 2 606 711

## Description

This invention relates to a vehicle having a multi-axle air suspension system.

There has been in recent years a substantial growth in the number of heavy goods vehicles which are built with multi-axle air suspensions for the axles. This is because of the much improved ride characteristics and equalisations of loads between axles which air suspensions provides, as compared with mechanical spring suspensions.

This change to air suspensions has brought to light certain problems which had not previously been apparent. One such problem, aggravated by a trend towards lightweight vehicle chassis construction in order to increase useful payload, occurs on multi-axle tipper lorries and trailers. In use the body rests on the vehicle chassis and its load is distributed along the chassis. When the body is tipped the load then becomes supported between the lifting jack at the front and the pivot point of the body at the rear, which is behind the rear axle. What was formerly a distributed load along the length of the chassis, giving rise to a hogging bending moment along the chassis.

Considering, for example, the case of a mechanically suspended tri-axle trailer, when the body is tipped loading is transferred to the rear axle and reduced on the leading and centre axles. This is accentuated by the rearward movement of the centre of gravity of the load as the front of the body is raised.

The equalisation system on a conventional multi-axle mechanical spring suspension is unable, due to frictional forces and geometrical limitations, to equalise the loading between the axles and the loading condition described during tipping can even result in the wheels of the leading axle lifting clear of the ground.

The situation is different with an air suspension because the inter-connection of the air springs for the axles on each side of the vehicle gives much more efficient equalisation of the load between the axles. The result of this is that the wheel of the front axle stay on the ground and, due to the load equalisation, an upward force is applied to the chassis by the air springs of the suspensions of the front, middle and rear axles. These forces are applied to the chassis through the lever arms represented by the distances of the air springs of these axles forward of the pivot point. Thus, the combination of increased upward loading and the associated lever arms in respect of the forward and middle axle air springs further increases the hogging moment applied to the vehicle chassis. This hogging moment is evidenced by significant deflection of the vehicle chassis, which is undesirable. One solution to this problem would be to stiffen the chassis but this incurs a significant weight and cost penalty.

The present invention is aimed at alleviating the adverse loading condition described.

The present invention is particularly concerned with a vehicle of the type, such as disclosed in DE-A-3545222, having a chassis, first and second axles mounted towards the rear of the vehicle and a multi-axle air suspension system comprising for each of said axles a first air spring and a second air spring each adapted to be mounted to act between a chassis of the vehicle and a respective end of the axle,first and second interconnecting means pneumatically interconnecting the first air springs and the second air springs respectively, and suspension levelling valve means pneumatically connected between a source of pressure air and the first and second air springs and being adapted to be connected mechanically between an axle and the chassis of the vehicle for operation, the suspension system also being provided with first and second valve means in pneumatic circuit with the first and second air springs respectively of each of the axles, and pressure reducing valve means in pneumatic circuit with a source of pressure air and with the first and second valve means, the arrangement being such that operation of the first and second valve means causes the air springs of the first axle to be isolated from the air springs of the second axle and connects the pressure reducing valve means to the air springs of said second axle whereby the air pressure in the air springs of said second axle is controlled at a lower pressure than in the air springs of the first axle.

The reference to an axle herein also includes a pair of aligned stub axles, for example as in an independent air suspension system, an example of which is described and illustrated in our British Patent No. 2165195.

According to the present invention a vehicle is provided of the type set forth which is characterised in that a body is pivoted to the rear end of the chassis, activator means is pivotally connected between the chassis and the body for lifting the front of the body away from the chassis for tipping, the second axle is forward of the first axle, and third valve means is provided to operate the first and second valve means when the body is in the tipped position.

The selective overiding of the normal equalisation system of the multi-axle air suspension system of the vehicle enables the second axle to be selectively loaded more lightly than the first axle when the vehicle is tipping so as to avoid adverse loading on the chassis.

The multi-axle air suspension system may include a "dump system" to allow selective deflation of the air springs. The dump system may comprise fourth and fifth selectively operable valve means in pneumatic circuit between the levelling valve means and the first and second air springs respectively, and sixth valve means to operate the third and fourth valve means whereby the air springs are disconnected from the levelling valve means and are connected to atmosphere to allow deflation of the air springs.

When a dump system is included there is preferably also provided in circuit with it interlock means which is operable when the fourth and fifth valve means are operated for deflation of the air springs so as to disable the third valve means, and so prevent operation of the first and second valve means to isolate the air springs of at least the first axle from the air springs of the second axle.

An embodiment of the invention will now be described by way of example with reference to the accompanying drawings in which:
Figure 1 is a schematic drawing showing a side elevation of a towing vehicle and a tipping trailer in transport mode,
Figure 2 is similar to Figure 1 but shows the trailer in tipping mode,
Figure 3 is a pneumatic circuit diagram, and
Figure 4 shows a modification to the circuit diagram of Figure 3.

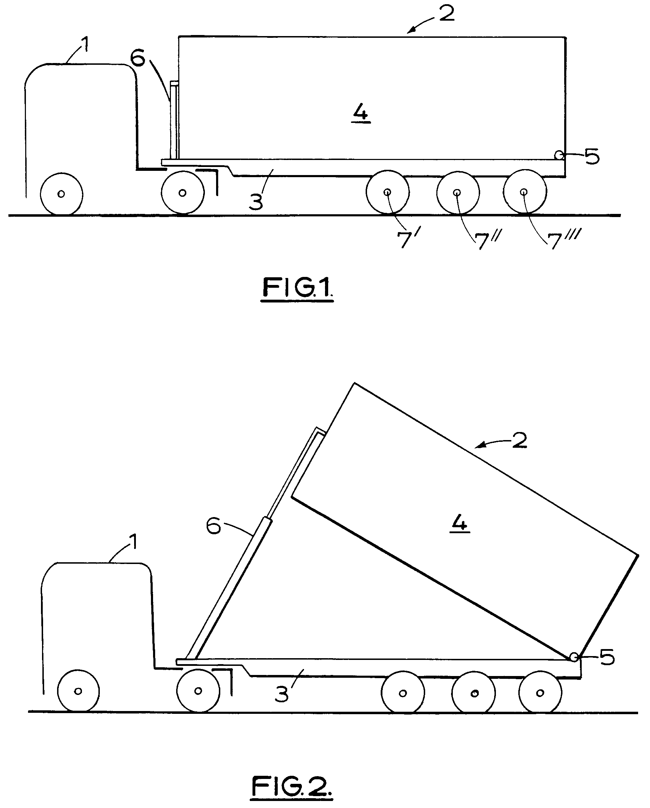

Referring to Figures 1 and 2 of the drawings, a tractor vehicle 1 is coupled to a tipping trailer 2 through a conventional fifth wheel coupling, not shown. The trailer 2 has a chassis 3, a body 4 pivoted to the chassis at a pivot 5 and a telescopic jack 6, for example an hydraulic jack, pivotally connected between the chassis 3 and the body 4. The trailer has three axles, being a leading axle 7', a middle axle 7'' and a rear axle 7''', towards its rear and an air suspension system of known construction is connected between each axle and the chassis 3 so that the axles are carried by pivotally mounted trailing arms, not shown, with an adjacent air spring acting generally between each end of each axle and the chassis.

As is seen in Figure 1, the body 4 rests on the chassis 3 so that its load is, distributed along the length of the chassis. Turning now to Figure 2, the jack 6 has been extended, lifting the front of the body 4 away from the chassis 3. The weight of the body (and its load) is now reacted between the ends of the chassis 3, giving rise to a hogging bending moment on the chassis. It will also be seen that the leading and middle axles 7', 7'' are located a significant distance forward of the pivot 5 and so the air springs for these axles have a significant lever arm through which they apply a further hogging moment to the chassis 3. The pressure in these air springs will be substantially the same as the pressure in the air springs of the rear axle 7''' so that the upward loads they exert on the chassis 3 will be substantially the same, but applied through lever arms of increasing length from rear to front.

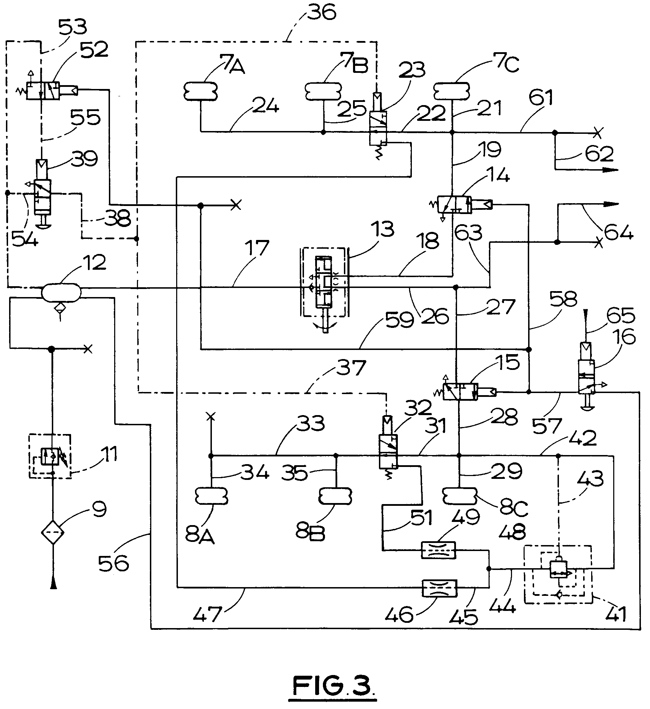

Referring now to Figure 3, first air springs -that is to say the air springs at one side of the trailer for the axles 7', 7'', 7''' - are referenced 7A, 7B, 7C from front to rear of the trailer. Second air springs at the other side of the trailer for the axles are referenced 8A, 8B, 8C. Thus, the leading axle 7' has air springs 7A, 8A, the middle axle 7'' has air springs 7B, 8B and the rear axle 7''' has air springs 7C, 8C.

The conventional trailer air system includes a filter 9, brake pressure protection valve 11, air reservoir 12, suspension levelling valve 13 and associated connecting pipes for connecting these components together and to a compressor, not shown, on the tractor vehicle.

As illustrated the air suspension system includes a dump system comprising pilot operated two-position spring return valves 14, 15 (constituting fourth and fifth selectively operable valve means) and a two-position manually operated pilot return dump valve 16 (constituting sixth valve means, for operating valves 14, 15), shown in the "Dump" selection in which the pilots of valves 14, 15 are connected to atmosphere and the air springs are also connected to atmosphere via the valves 14, 15. Dump valve 16 is reverted by air pressure at its pilot from a pipe 65 which is pressurised when the vehicle service brake is applied. Alternatively, it could be reverted by other means, for example solenoid operation actuated from the brake-light circuit.

The levelling valve 13 receives a pressure air supply via the reservoir 12 and a pipe 17. Valve 13 is connected to air spring 7C via a pipe 18, valve 14 and pipes 19, 21, and on to air springs 7A, 7B via pipe 22, a valve 23 and pipes 24, 25.

Levelling valve 13 is also connected to air spring 8C via pipes 26, 27, valve 15 and pipes 28, 29, and on to air springs 8A, 8B via pipe 31, a valve 32 and pipes 33, 34 and 35.

The valves 23, 32 (constituting, respectively, first and second selectively operable valve means) are two-position pilot operated spring return valves, and their pilots are connected by pipes 36, 37, 38 to a two position manually operated valve 39 (constituting third valve means, for operating valves 23, 32) having an override pilot operated return.

A pilot operated pressure reducing valve 41 receives a pressure air supply via the levelling valve 13, pipes 26, 27, valve 15, pipe 28 and a pipe 42. Its pilot is connected to pipe 42 by a pipe 43. The downstream side of valve 41 is connected to valve 23 via pipes 44, 45 a two-way restrictor 46 and a pipe 47. Similarly, valve 41 is connected to valve 32 via pipes 44, 48, two-way restrictor 49 and pipe 51.

A two-position pilot operated spring return valve 52 (constituting interlock means) receives a pressure air supply from reservoir 12 via pipe 53 and this also supplies valve 39 via pipe 54. A pipe 55 connects valve 52 to the pilot of valve 39.

A pipe 56 connects reservoir 12 to valve 16 to supply pressure air through valve 16 to the pilots of valves 14, 15 and 52 via pipes 57, 58 and 59.

Input to a load sensing valve (for modulating brake air pressure dependent on the vehicle load) is provided by a pipe 61 connected to pipe 19 and by a pipe 62, also by a pipe 63 connected to pipe 26 and by a pipe 64.

Assuming that the vehicle service brake is applied, air pressure in pipe 65 causes reversion of valve 16 (reversion will in fact be the normal mode for this valve). Pressure from reservoir 12 passes through pipe 56, valve 16, pipes 57, 58 and 59 to operate valves 15, 14, 52 respectively whereby the air springs are connected to the levelling valve 13 and the pilot of valve 39 is connected to atmosphere.

If valve 39 is now operated pressure air from reservoir 12 passes through pipes 53, 54, valve 39 and pipes 38, 36, 37 to operate the pilots of valves 23, 32 causing these valves to change over. The air springs 7A, 7B and 8A, 8B at the forward and middle axles 7', 7'' are now respectively isolated from the air springs 7C, 8C at the rear axle 7''' and are connected by pipes 47, 51, restrictors 46, 49 and pipes 45, 48, 44 to the downstream side of pressure reducing valve 41. The latter is operated by its pilot fed with pressure air through pipe 43, and controls the pressure in the air springs 7A, 7B, 8A, 8B at a reduced level. The pressure reducing valve 41 preferably has a facility for setting the output pressure, so that it may be adjusted. The reduced pressure output required will depend on the configuration of the vehicle and its axles, its construction and loading. Preferably the lower pressure is set to be between 50% and 70% of the pressure of the air springs of the rear axle. In the example of the tri-axle tipper trailer which has been described the reduced pressure output may be of the order of 60% of the input pressure. That is to say, the air springs 7C, 8C of the rear axle 7''' will be at 100% of the pressure downstream of levelling valve 13 and the air springs 7A, 8A; 7B, 8B of the front and middle axles 7', 7'' will be at 60% of that pressure, thus reducing the hogging moment applied to the chassis via the air suspension as compared with the situation when all the air springs are at the same pressure.

Clearly, if valves 23, 32 are located alternatively between air springs 7A, 7B and 8A, 8B then the reduced pressure will be supplied to the air springs 7A, 8A of the front axle 7' and full pressure will be supplied to the air springs 7B, 7C and 8B, 8C at the middle and rear axles 7'', 7'''.

The restrictors 46, 49 are provided to give a degree of roll stiffness to the air suspension (that is, between air springs 7A, 7B and 8A, 8B) when the reduced pressure system is in operation, serving the same purpose as the restrictors shown on the downstream side of valve 13.

The valve 39 is reset manually to revert the air suspension system to the normal transport mode following completion of load discharge.

It will be seen that valve 39 cannot be operated to effect load re-distribution between the axles if dump valve 16 is in the "Dump" selection because the interlock valve 52 causes pressurisation of the pilot of valve 39.

If a dump system is not fitted the valves 14, 15 and 16 are omitted and there is no need for the interlock valve 52. In consequence a two-position manually operated valve can be substituted for the manually operated pilot override return valve 39.

It may be desirable to provide for an automatic reversion of the air suspension system to the normal transport mode following completion of load discharge, in case the operator fails to reset valve 39 manually.

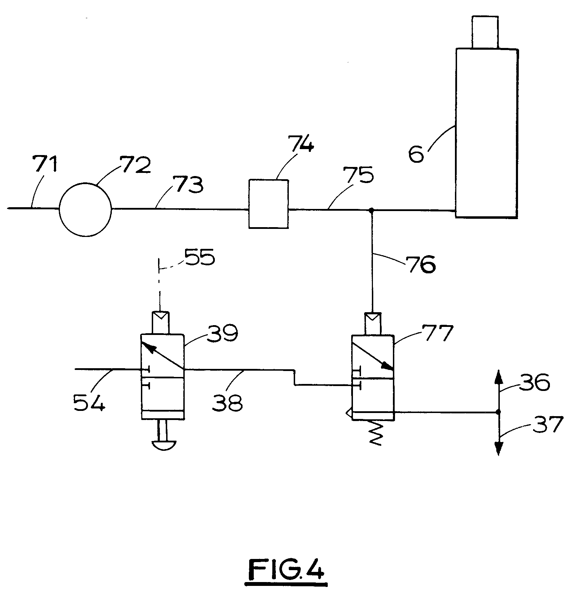

Referring now to Figure 4 of the drawings, the hydraulic system for tipping the body of the vehicle to discharge the load is represented by a pipe 71 through which a pump 72 draws hydraulic fluid from a reservoir (not shown) and discharges it through a pipe 73 to a selector valve 74. From selector valve 74 fluid can be supplied through a pipe 75 to the hydraulic jack 6. A pipe 76 connects pipe 75 to a two-position pilot operated spring return valve 77 (seventh valve means) inserted in pipe 38 of Figure 3.

When the selector valve 74 is selected to cause extension of the jack 6 the hydraulic pressure generated causes valve 77 to change over. Operation of manually operated valve 39 will cause reduction of the air pressure in the air springs 7A, 8A and 7B, 8B as has been described.

On completion of load discharge the selector valve 74 is operated to return the body 4 so that it rests on the chassis 3. The hydraulic pressure in pipes 75, 76 decays allowing valve 77 to revert whereby the pilots of valves 23, 32 are connected to atmosphere. Valves 23, 32 revert and the air suspension reverts to the normal transport mode even though the valve 39 has not been reset manually.

It will be appreciated that the valve 77, instead of being pilot operated direct from the hydraulic system, could be solenoid operated with the signal being derived from a pressure operated switch at the jack 6 or in pipe 75.

If wholly automatic operation is required so that the pressure in the air springs 7A, 8A and 7B, 8B is automatically reduced when body tipping is selected, this may be effected by omitting the valve 39 so that valve 77 (or its solenoid operated replacement) is supplied with pressure air from pipe 54. As the body is reverted so will the air suspension revert to the normal transport mode as already described.

It will also be appreciated that the valve 77, instead of having pilot operation, could be mechanically actuated by movement of the body during tipping.

Again, the valve 39 has been described as manually operated but this could be replaced by a solenoid valve, for example remote operated from the vehicle cab.

The restrictors 46, 49 (and corresponding restrictors in valve 13) have been described as being two-way restrictors, that is, flow is restricted in both directions. It may be advantageous in certain applications for these to be one-way restrictors so as only to restrict flow to the air springs and not from the air springs.

## Claims

1. A vehicle having a chassis, first and second axles (7'''; 7'', 7') mounted towards the rear of the vehicle and a multi-axle air suspension system comprising for each of said axles (7'''; 7'', 7') a first air spring (7C, 7B, 7A) and a second air spring (8C, 8B, 8A) each adapted to be mounted to act between a chassis of the vehicle and a respective end of the axle (7'''; 7'', 7'), first and second interconnecting means (18, 14, 19, 21, 24, 25 and 26, 27, 15, 28, 29, 31, 33, 34, 35) pneumatically interconnecting the first air springs (7C, 7B, 7A) and the second air springs (8C, 8B, 8A) respectively, and suspension levelling valve means (13) pneumatically connected between a source of pressure air (12) and the first and second air springs and being adapted to be connected mechanically between an axle (7'''; 7'', 7') and the chassis of the vehicle for operation, the suspension system also being provided with first and second valve means (23; 32) in pneumatic circuit with the first and second air springs (7C, 7B, 7A; 8C, 8B, 8A) respectively of each of the said axles (7'''; 7'', 7'), and pressure reducing valve means (41) in pneumatic circuit with a source of pressure air and with the first and second valve means (23; 32), the arrangement being such that operation of the first and second valve means (23; 32) causes the air springs (7C, 8C) of the first axle (7''') to be isolated from the air springs (7B, 8B; 7A, 8A) of the second axle and connects the pressure reducing valve means (41) to the air springs (7B, 8B; 7A, 8A) of said second axle whereby the air pressure in the air springs of said second axle is controlled at a lower pressure than in the air springs (7C, 8C) of the first axle (7'''), characterised in that a body is pivoted to the rear end of the chassis, actuator means is pivotally connected between the chassis and body for lifting the front of the body away from the chassis for tipping, the second axle is forward of the first axle, and third valve means is provided to operate the first and second valve means when the body is in the tipped position.

2. A vehicle as claimed in Claim 1 characterised in that restriction means (46, 49) are provided in circuit between the pressure reducing valve means (41) and the first and second valve means (23; 32).

3. A vehicle as claimed in Claim 1 or Claim 2 characterised in that the pressure reducing valve means (41) is pilot operated.

4. A vehicle as claimed in any one of Claims 1 to 3 characterised in that the pressure reducing valve means (41) is adjustable to facilitate setting of said lower pressure to a desired value.

5. A vehicle as claimed in any preceding Claim characterised in that said lower pressure is set to be between 50% and 70% of the pressure obtaining in the air springs (7C, 8C) of at least the first axle (7''').

6. A vehicle as claimed in any preceding claim characterised in that the suspension system includes dump means (14, 15, 16) for releasing pressure air from the air springs (7C, 8C,; 7B, 8B; 7A, 8A), and interlock valve means (52) in circuit with the dump means (14, 15, 16) whereby operation of the dump means to release pressure air from the air springs causes the interlock valve means (52) to prevent operation of the third valve means (39), thereby preventing operation of the first and second valve means (23; 32) to isolate the air springs (7C, 8C) of at least the first axle (7''') from the other air springs (7B, 8B; 7A, 8A).

7. A vehicle as claimed in Claim 6 characterised in that the dump means comprises fourth and fifth valve means (14; 15) which are pilot operated and in circuit between the levelling valve means (13) and the first and second air springs (7C, 7B, 7A; 8C, 8B, 8A) respectively, and a sixth valve means (16) in circuit with a pressure air supply and operable to connect the air supply to the pilots of the fourth and fifth valve means (14; 15) to operate them and so connect the respective air springs to atmosphere.

8. A vehicle as claimed in Claim 7 characterised in that the third valve means (39) and the interlock valve means (52) are pilot operated and the sixth valve means (16), on operation, also connects the air supply to the pilot of the interlock valve means (52) causing operation thereof, whereby a pressure air supply to the interlock valve means (52) is connected to the pilot of the third valve means (39) rendering the third valve means inoperable to isolate at least the air springs (7C, 8C) of the first axle (7''') from the other air springs (7B, 8B; 7A, 8A).

9. A vehicle as claimed in any preceding Claim characterised in that the first and second valve means (23; 32) are two-position three way pilot operated spring return valves.

10. A vehicle as claimed in any preceding Claim characterised in that the suspension system includes in circuit with the third valve means (39) a seventh valve means (77) having a first condition in which it isolates the third valve means (39) from the first and second valve means (23; 32) and a second condition in which it connects the third valve means (39) to the first and second valve means (23; 32), the seventh valve means (77) being operable to the second condition in response to commencement of operation of the actuator means to tip the body.

11. A vehicle as claimed in Claim 10 characterised in that the actuator means comprises a tipping jack having a pressure hydraulic system and the seventh valve means (77) comprises a two-position pilot operated spring return valve, the pilot thereof being connected to the pressure hydraulic system of the tipping jack.

## Patentansprüche

1. Ein Fahrzeug mit einem Gestell, erster und zweiter zum hinteren Ende des Fahrzeugs hin befestigten Achsen (7'''; 7'', 7') und einem Mehrachsluftaufhängungssystem, das für jede der Achsen (7'''; 7'', 7') eine erste Luftfeder (7C, 7B, 7A) und eine zweite Luftfeder (8C, 8B, 8A), von denen jede befestigt werden kann, um zwischen dem Gestell des Fahrzeugs und einem jeweiligen Ende der Achse (7'''; 7'', 7') zu wirken, eine erste und zweite Verbindungseinrichtung (18, 14, 19, 21, 24, 25 und 26, 27, 15, 28, 29, 31, 33, 34, 35), die die ersten Luftfedern (7C, 7B, 7A) bzw. die zweiten Luftfedern (8C, 8B, 8A) miteinander pneumatisch verbinden, und eine Aufhängungsnivelliervngsventileinrichtung (13) enthält, die zwischen einer Druckluftquelle (12) und den ersten und zweiten Luftfedern pneumatisch verbunden ist und die zum Betrieb mechanisch zwischen einer Achse (7'''; 7'', 7') und dem Gestell des Fahrzeugs verbunden werden kann, wobei das Aufhängungssystem auch ausgestattet ist mit einer ersten und zweiten Ventileinrichtung (23; 32) in pneumatischer Schaltung mit den ersten bzw. den zweiten Luftfedem (7C, 7B, 7A; 8C, 8B, 8A) von jede der genannten Achsen (7'''; 7'', 7') und einer Druckminderungsventileinrichtung (41) in pneumatischer Schaltung mit einer Druckluftquelle und mit der ersten und zweiten Ventileinrichtung (23; 32), wobei die Anordnung so gestaltet ist, daß eine Betätigung der ersten und zweiten Ventileinrichtung (23; 32) zur Folge hat, daß die Luftfedern (7C, 8C) der ersten Achse (7''') von den Luftfedern (7B, 8B; 7A, 8A) der zweiten Achse abgetrennt werden und die Druckminderungsventileinrichtung (41) mit den Luftfedern (7B, 8B; 7A, 8A) der zweiten Achse verbunden wird, wodurch der Luftdruck in den Luftfedern der zweiten Achse auf einen niedrigeren Luftdruck eingestellt wird als dem in den Luftfedern (7C, 8C) der ersten Achse (7'''),
**dadurch gekennzeichnet,**
daß ein Aufbau zum hinteren Ende des Gestells hin geschwenkt wird, eine Betätigungseinrichtungmit dem Gestell und dem Aufbau zum Anheben des vorderen Teil des Aufbaus weg vom Gestell zwecks Kippung schwenkbar verbunden ist, sich die zweite Achse vor der ersten Achse befindet und ein dritte Ventileinrichtung vorgesehen ist, um die erste und zweite Ventileinrichtung zu betätigen, wenn sich der Aufbau in der gekippten Stellung befindet.

2. Ein Fahrzeug gemäß Anspruch 1,
**gekennzeichnet dadurch,**
daß Durchflußbegrenzungseinrichtungen (46, 49) zwischen der Druckminderungsventileinrichtung (41) und der ersten und zweiten Ventileinrichtung (23; 32) in Schaltung vorgesehen sind.

3. Ein Fahrzeug gemäß Anspruch 1 oder Anspruch 2,
**gekennzeichnet dadurch,**
daß die Druckminderungsventileinrichtung (41) vorgesteuert ist.

4. Ein Fahrzeug gemäß irgendeinem der Ansprüche 1 bis 3,
**gekennzeichnet dadurch,**
daß die Druckminderungsventileinrichtung (41) verstellbar ist, um ein Einstellen des niedrigeren Drucks auf einen gewünschten Wert zu ermöglichen.

5. Ein Fahrzeug gemäß irgendeinem vorangehenden Anspruch,
**gekennzeichnet dadurch,**
daß der niedrigere Druck auf zwischen 50 % und 70 % des Drucks eingestellt wird, den man in den Luftfedern (7C, 8C) zumindest ersten Achse (7''') erreicht.

6. Ein Fahrzeug gemäß irgendeinem vorangehenden Anspruch,
**gekennzeichnet dadurch,**
daß das Aufhängungssystem eine Druckablaßeinrichtung (14, 15, 16) zur Freisetzung von Druckluft aus den Luftfedern (7C, 8C; 7B, 8B; 7A, 8A) und eine Sperrventileinrichtung (52) in Schaltung mit der Druckablaßeinrichtung (14, 15, 16) enthält, wobei eine Betätigung der Druckablaßeinrichtung zur Freisetzung von Druckluft aus den Luftfedern die Sperrventileinrichtung (52) veranlaßt, eine Betätigung der dritten Ventileinrichtung (39) zu verhindern, wodurch eine Betätigung der ersten und zweiten Ventileinrichtung (23; 32) unterbindet, um die Luftfedern (7C, 8C) zumindest der ersten Achse (7''') von den anderen Luftfedern (7B, 8B; 7A, 8A) abzutrennen.

7. Ein Fahrzeug gemäß Anspruch 6,
**gekennzeichnet dadurch,**
daß die Druckablaßeinrichtung eine vierte und fünfte Ventileinrichtung (14; 15), welche vorgesteuert sind und sich in Schaltung zwischen der Nivellierungsventileinrichtung (13) und den ersten bzw. zweiten Luftfedern (7C, 7B, 7A; 8C, 8B, 8A) befinden, und eine sechste Ventileinrichtung (16) umfaßt, die in Schaltung mit einer Druckluftversorgung ist und betätigbar ist, um die Druckversorgung mit den Steuerungen der vierten und fünften Ventileinrichtung (14; 15) zu verbinden, damit sie diese betätigen und so die jeweiligen Luftfedern mit der Umgebung verbinden.

8. Ein Fahrzeug gemäß Anspruch 7,
**gekennzeichnet dadurch,**
daß die dritte Ventileinrichtung (39) und die Sperrventileinrichtung (52) vorgesteuert sind und die sechste Ventilvorrichtung (16) bei Betätigung auch die Luftversorgung mit der Ansteuerung der Sperrventileinrichtung (52) verbindet, was deren Betätigung verursacht, wodurch eine Druckluftversorgung über die Sperrventileinrichtung (52) mit der Ansteuerung der dritten Ventileinrichtung (39) verbunden wird, was die dritte Ventileinrichtung betätigungsunfähig macht, um die Luftfedern (7C, 8C) zumindest der ersten Achse (7''') von den anderen Luftfedern (7B, 8B; 7A, 8A) abzutrennen.

9. Ein Fahrzeug gemäß irgendeinem vorangehenden Anspruch,
**gekennzeichnet dadurch,**
daß die erste und zweite Ventileinrichtung (23; 32) vorgesteuerte Zweistellungs-Dreiwege-Federrückstellventile sind.

10. Ein Fahrzeug gemäß irgendeinem vorangehenden Anspruch,
**gekennzeichnet dadurch,**
daß das Aufhängungssystem in Schaltung mit der dritten Ventileinrichtung (39) eine siebte Ventileinrichtung (77) enthält, welche einen ersten Zustand, in welchem sie die dritte Ventileinrichtung (39) von der ersten und zweiten Ventileinrichtung (23; 32) trennt, und einen zweiten Zustand besitzt, in welchem sie die dritte Ventileinrichtung (39) mit der ersten und zweiten Ventileinrichtung (23; 32) verbindet, wobei die siebte Ventileinrichtung (77) als Antwort auf die Inbetriebnahme der Betätigungseinrichtung zur Kippung des Aufbaus in den zweiten Zustand versetzt wird.

11. Ein Fahrzeug gemäß Anspruch 10,
**gekennzeichnet dadurch,**
daß die Betätigungseinrichtung einen Kippheber mit einem hydraulischen Drucksystem umfaßt und die siebte Ventileinrichtung (77) eine vorgesteuerte Zweistellungsfederrückstellventileinrichtung enthält, deren Ansteuerung mit dem hydraulischen Drucksystem des Kipphebers verbunden ist.

## Revendications

1. Véhicule comportant un châssis, des premier et second essieux (7''';7'',7') montés vers l'arrière du véhicule et un système de suspension pneumatique d'essieux multiples comprenant, pour chacun desdits essieux (7''';7'',7'), un premier ressort pneumatique (7C,7B,7A) et un second ressort pneumatique (8C,8B,8A) adaptés chacun de manière à être montés pour agir entre un châssis du véhicule et une extrémité respective de l'essieu (7''';7'',7'), des premier et second moyens d'interconnexion (18,14,19,21,24,25 et 26, 27,15,28,29,31,33,34,35) raccordant pneumatiquement respectivement les premiers ressorts pneumatiques (7C,7B,7A) et les seconds ressorts pneumatiques (8C,8B,8A) et des moyens formant soupape (13) de mise à niveau de la suspension, branchés pneumatiquement entre une source d'air comprimé (12) et les premier et second ressorts pneumatiques et étant adaptés pour être raccordés pneumatiquement entre une source d'air comprimé (12) et les premier et second ressorts et étant adaptés pour être raccordés mécaniquement entre un essieu (7''';7'',7') et le châssis du véhicule pour le fonctionnement, le système de suspension étant également équipé de premiers et seconds moyens formant soupapes (23;32) raccordés selon un circuit pneumatique aux premier et second ressorts pneumatiques (7C,7B,7A; 8C,8B,8A) faisant partie respectivement desdits essieux (7''';7'',7'), et des moyens formant soupape de détente (41) raccordés selon un circuit pneumatique à une source d'air comprimé et aux premiers et seconds moyens formant soupapes (23;32), l'agencement étant tel que le fonctionnement des premier et second moyens formant soupapes (23;32) provoque l'isolation des ressorts pneumatiques (7C,8C) du premier essieu (7''') par rapport aux ressorts pneumatiques (7B,8B; 7A,8A) du second essieu et raccorde les moyens formant soupape de détente (41) aux ressorts pneumatiques (7B,7B; 7A,8A) dudit second essieu, ce qui a pour effet que la pression de l'air dans les ressorts pneumatiques dudit second essieu est commandée à une pression inférieure à celle régnant dans les ressorts pneumatiques (7C,8C) du premier essieu (7'''), caractérisé en ce qu'une carrosserie est montée pivotante sur l'extrémité arrière du châssis, des moyens formant actionneur sont raccordés de manière à pouvoir pivoter entre le châssis et la carrosserie pour soulever l'avant de la carrosserie en l'écartant du châssis pour l'opération de basculement, le second essieu est situé en avant du premier essieu, et des troisièmes moyens formant soupape sont prévus pour actionner les premiers et seconds moyens formant soupapes lorsque le corps est dans la position basculée.

2. Véhicule selon la revendication 1, caractérisé en ce que des moyens de limitation (48,49) sont prévus dans le circuit entre les moyens formant soupape de détente (41) et les premiers et seconds moyens formant soupapes (23;32).

3. Véhicule selon la revendication 1 ou 2, caractérisé en ce que les moyens formant soupape de détente (41) sont commandés par pilote.

4. Véhicule selon l'une quelconque des revendications 1 à 3, caractérisé en ce que les moyens formant soupape de détente (41) sont réglables de manière à faciliter le réglage de ladite pression inférieure à une valeur désirée.

5. Véhicule selon l'une quelconque des revendications précédentes, caractérisé en ce que ladite pression inférieure est réglée de manière à être comprise entre 50 % et 70 % de la pression obtenue dans les ressorts pneumatiques (7C,8C) au moins du premier essieu (7''').

6. Véhicule selon l'une quelconque des revendications précédentes, caractérisé en ce que le système de suspension comprend des moyens de vidage (14,15, 16) pour évacuer l'air comprimé des ressorts pneumatiques (7C,8C; 7B,8B; 7A,8A) et des moyens formant soupape de verrouillage (52) en circuit avec les moyens de vidage (14,15,16), ce qui a pour effet que l'actionnement des moyens de vidage pour libérer l'air comprimé des ressorts pneumatiques amène les moyens formant soupape de verrouillage (52) à empêcher l'actionnement des troisièmes moyens formant soupape (39), ce qui empêche le fonctionnement des premiers et seconds moyens formant soupapes (23; 32) pour isoler les ressorts pneumatiques (7C,8C) au moins du premier essieu (7''') par rapport aux autres ressorts pneumatiques (7B,8B;7A,8A).

7. Véhicule selon la revendication 6, caractérisé en ce que les moyens de vidage comprennent des quatrièmes et cinquièmes moyens formant soupapes (14;15), qui sont actionnés selon une commande par pilote et sont branchés en circuit entre les moyens formant soupape de mise à niveau (13) et respectivement les premier et second ressorts pneumatiques (7C,7B,7A; 8C,8B,8A), et des sixièmes moyens formant soupape (16) branchés en circuit avec une alimentation d'air comprimé et pouvant agir de manière à raccorder l'alimentation d'air aux pilotes des quatrièmes et cinquièmes moyens formant soupapes (14;15) pour actionner ces derniers et raccorder ainsi les ressorts pneumatiques respectifs à l'atmosphère.

8. Véhicule selon la revendication 7, caractérisé en ce que les troisièmes moyens formant soupape (39) et les moyens formant soupape de verrouillage (52) sont actionnés par pilotes et qu'en fonctionnement les sixièmes moyens formant soupape (16) raccordent également l'alimentation d'air aux pilotes des moyens formant soupape de verrouillage (52) pour déclencher l'actionnement de ces moyens, ce qui a pour effet qu'une alimentation en air comprimé envoyée aux moyens formant soupape de verrouillage (52) est raccordée aux pilotes des troisièmes moyens formant soupape (39), ce qui rend inactifs les troisièmes moyens formant soupape pour isoler au moins les ressorts pneumatiques (7C,8C) du premier essieu (7''') par rapport aux autres ressorts pneumatiques (7B,8B; 7A,8A).

9. Véhicule selon l'une quelconque des revendications précédentes, caractérisé en ce que les premiers et seconds moyens formant soupapes (23;32) sont des soupapes à rappel par ressort, à deux positions et à trois voies, actionnées par des pilotes.

10. Véhicule selon l'une quelconque des revendications précédentes, caractérisé en ce que le système de suspension comprend, en circuit avec les troisièmes moyens formant soupape (39), des septièmes moyens formant soupape (77) possédant une première condition, dans laquelle ils isolent les troisièmes moyens formant soupape (39) par rapport aux premiers et seconds moyens formant soupapes (23;32), et une seconde condition, dans laquelle ils raccordent les troisièmes moyens formant soupape (32) aux premiers et seconds moyens formant soupapes (23;32), les septièmes moyens formant soupape (77) pouant agir sur la seconde condition en réponse au début de fonctionnement des moyens actionneurs pour faire basculer la carrosserie.

11. Véhicule selon la revendication 10, caractérisé en ce que les moyens actionneurs comprennent un vérin de basculement possédant un système hydraulique sous pression, et les septièmes moyens formant soupape (77) comprennent une soupape à rappel par ressort à deux positions, actionnée par un pilote, le pilote de ces moyens formant soupape étant raccordé au système hydraulique sous pression du vérin de basculement.
